(19) Europäisches Patentamt / European Patent Office / Office européen des brevets

(11) **EP 2 539 680 B1**

(12) **EUROPÄISCHE PATENTSCHRIFT**

(45) Veröffentlichungstag und Bekanntmachung des Hinweises auf die Patenterteilung:
**03.08.2016 Patentblatt 2016/31**

(51) Int Cl.:
***G01M 13/04*** *(2006.01)*

(21) Anmeldenummer: **11704565.8**

(22) Anmeldetag: **03.02.2011**

(86) Internationale Anmeldenummer:
**PCT/EP2011/051589**

(87) Internationale Veröffentlichungsnummer:
**WO 2011/104098 (01.09.2011 Gazette 2011/35)**

(54) **VERFAHREN UND VORRICHTUNG ZUR BEWERTUNG DER SCHÄDIGUNG VON WÄLZLAGERN AN UMRICHTERGESPEISTEN ELEKTRISCHEN MASCHINEN**

METHOD AND DEVICE FOR ASSESSING THE DAMAGE TO ROLLING BEARINGS IN INVERTER-FED ELECTRIC MACHINES

PROCÉDÉ ET DISPOSITIF POUR ÉVALUER LA DÉTÉRIORATION DE PALIERS À ROULEMENT SUR DES MACHINES ÉLECTRIQUES ALIMENTÉES PAR UN CONVERTISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2010 DE 102010002297**

(43) Veröffentlichungstag der Anmeldung:
**02.01.2013 Patentblatt 2013/01**

(73) Patentinhaber: **Siemens Aktiengesellschaft**
**80333 München (DE)**

(72) Erfinder:
• GATTERMANN, Sven
  **90513 Zirndorf (DE)**
• KOWALEWSKI, Ralf
  **90768 Fürth (DE)**
• PROBOL, Carsten
  **91054 Buckenhof (DE)**
• STECKENBORN, Arno
  **13589 Berlin (DE)**

• THEILE, Oliver
  **13437 Berlin (DE)**
• TISCHMACHER, Hans
  **91207 Lauf (DE)**

(56) Entgegenhaltungen:
**EP-A1- 1 835 598          EP-A1- 2 221 597**
**DE-A1-102004 056 996**

• DELGADO M ET AL: "Bearing diagnosis methodologies by means of Common Mode Current", POWER ELECTRONICS AND APPLICATIONS, 2009. EPE '09. 13TH EUROPEAN CONFERENCE ON, IEEE, PISCATAWAY, NJ, USA, 8. September 2009 (2009-09-08), Seiten 1-10, XP031541412, ISBN: 978-1-4244-4432-8
• DAVID DAHL ET AL: "Gear up your bearings", IEEE INDUSTRY APPLICATIONS MAGAZINE, IEEE SERVICE CENTER, PISCATAWAY, NJ, US, Bd. 14, Nr. 4, 1. Juli 2008 (2008-07-01), Seiten 45-53, XP011216144, ISSN: 1077-2618

EP 2 539 680 B1

**Beschreibung**

Bei elektrischen Maschinen, insbesondere bei Motoren mit Umrichterspeisung entstehen parasitäre Effekte, die u.a. zu einem Stromfluss über die Lager des jeweiligen Motors führen.

Bei größeren elektrischen Motoren, die direkt an einem sinusförmigen elektrischen Netz angeschlossen sind, treten vor allem Lagerströme auf, die ihre Ursache in Unsymmetrien des elektrischen Kreises, Fertigungstoleranzen und Materialanisotropien haben. Die asymmetrische Verteilung des magnetischen Flusses im Motor induziert eine Spannung in der Welle der elektrischen Maschine, die zu einem niederfrequenten Stromfluss durch die Lager führt. Diese Ströme zirkulieren in einem geschlossenen Kreis von Welle - Lager - Lagerschild - Gehäuse.

Eine Unterbrechung dieses Stromflusses wird durch Isolierung des Lagers erreicht.

Bei elektrischen Maschinen mit elektrischer Speisung durch einen Umrichter, insbesondere einen Spannungszwischenkreisumrichter wird die Ausgangsspannung durch geregeltes Schalten des Gleichspannungszwischenkreises erzeugt, die dann am Ausgang des Umrichters anliegt. Ein Wechsel von positivem und negativem Potential in schneller Folge führt bei einem Zweipunktwechselrichter zu einem Spannungsverlauf, dessen Summe der Dreiphasenspannung ungleich Null ist und als sogenannte Common-Mode-Spannung bezeichnet wird.

Jede dieser steilen Spannungs-Schalthandlungen verursacht hochfrequente Anregungen, die zu hochfrequenten Oberwellen führen mit daraus resultierenden Strömen, die über parasitäre Pfade zur Quelle, also zum Umrichterzwischenkreis zurückfließen.

Diese Ströme können in den Lagern, insbesondere in den Wälzlagern Laufbahnveränderungen verursachen. Bei stärkeren Laufbahnveränderungen verursachen die Wälzkörper beim Überwälzen zunächst Geräusche. Später fällt dann das Lager mit Ermüdungsschäden aus, was zum Ausfall der elektrischen Maschine oder gar zu deren Beschädigung führen kann.

Somit müssen die betroffenen Lager vor Erreichen der angestrebten Lagerlebensdauer ausgetauscht werden, was nicht eingeplante Kosten verursacht.

Bei in Anlagen eingebetteten Motoren wird durch äußere Messungen auf eine elektrische Lagerbelastung geschlossen. Dabei wird versucht, durch Messung der Erdströme, Wellenströme und Wellenspannungen oder durch Geräuschmessungen eine Zustandsbeschreibung des Lagers durchzuführen. Diese Zustandsbeschreibung ist aber äußerst ungenau. Deshalb werden dann sicherheitshalber die Lager weit vor ihrem eigentlichen Ausfall ausgewechselt.

Das Dokument EP 1 835 598 A1 beschreibt ein Verfahren gemäß dem Oberbegriff des Patentanspruchs 1 und eine Vorrichtung gemäß dem Oberbegriff des Patentanspruchs 8 zum Anzeigen einer elektrischen Entladung in einem Lager eines elektrischen Antriebssystems, insbesondere zur Anzeige einer elektrischen Entladung in einem nichtleitenden Medium zwischen einem Wälzkörper und einer Laufbahn in einem Lager eines elektrischen Antriebssystems. In der EP 1 835 598 A1 erfolgt hierzu eine Erfassung von Radiofrequenzsignalen aus der Ferne, wobei das Antriebssystem die Radiofrequenzsignale emittiert. Die erfassten Radiofrequenzsignale umfassen ein Radiofrequenzsignal, das im Zusammenhang mit einer elektrischen Entladung im nichtleitenden Medium steht. Die EP 1 835 598 A1 schlägt die Erfassung aus der Ferne vor, da es in der EP 1 835 598 A1 als nachteilig angesehen wird, den Lagerstrom direkt an bestimmten Messpunkten innerhalb eines Wechselstrommotors zu messen, z.B. mit einem speziell entwickelten, flexiblen Rogowski-Stromsensor mit einer Luftspule. Zum Schätzen der elektrischen Entladung und zum Anzeigen der elektrischen Entladung erfolgt eine Verarbeitung der erfassten Radiofrequenzsignale. In der EP 1 835 598 A1 wird angegeben, dass als Alternative zu einer manuellen Untersuchung des erfassten Signals nach einer Filterung eine Übertragung des Ausgangs eines das erfasste Signal anzeigenden Oszilloskops zu einem Computergerät erfolgen kann, das eine weitere Verarbeitung, Analyse und Speicherung durchführen kann. Die weitere Verarbeitung und Analyse kann eine Entladungszählung, ein Schätzen der Entladungszeit und ungefähre Entladungsenergie, etc. sein.

Ausgehend davon liegt der Erfindung die Aufgabe zugrunde, eine exaktere Methode gegenüber den bisherigen Geräusch- und Vergleichsmessungen zu schaffen, um die Restlebensdauer eines Lagers genauer abschätzen zu können.

Die Lösung der gestellten Aufgabe gelingt mit den Merkmalen des Patentanspruchs 1 durch ein Verfahren zur Bewertung einer Schädigung eines Wälzlagers einer elektrischen Maschine.

Die Lösung der gestellten Aufgabe gelingt mit den Merkmalen des Patentanspruchs 8 auch durch eine Vorrichtung die dazu ausgelegt ist eine Schädigung eines Wälzlagers einer elektrischen Maschine, die an einen Umrichter elektrisch angeschlossen ist, zu bewerten.

Erfindungsgemäß wird nun durch die direkte Erfassung der im Schmierspalt stattfindenden Energieübertragung eine exakte Bewertung der Schädigung bzw. der Restlebensdauer des Lagers möglich, die durch entsprechende Auswertemethoden auch klassifizierend ist.

Die Spannungsdifferenz führt zu Lichtbogenentladungen und damit zu einem Stromfluss über den Schmierfilm der Lager und damit zu Materialaufschmelzungen bzw. zu Materialverdampfungen in den Lagerlaufbahnen. Eine gleichmäßige Aufschmelzungsstruktur stellt dabei in der Regel kein Problem hinsichtlich der Lebensdauer der Lagerlaufbahnen dar. Erst wenn Laufbahnmaterial beim Stromdurchgang teilweise verdampft wird, kommt es zu einer schädlichen Riffelbildung. Diese Riffelbildung zeichnet sich durch eine charakteristische senkrecht zur Wälzrichtung der Wälzkörper orientierte Berg- und Talstruktur aus.

Für eine Materialverdampfung ist dabei eine deutlich höhere Energie notwendig, verglichen mit derjenigen, die zur Materialaufschmelzung des identischen Materialvolumens notwendig ist.

Derartige Energiebetrachtungen sind bisher nicht durchgeführt worden.

Bei ausreichend hoher Spannung über einem Lager einer elektrischen Maschine kommt es zu Überschreitung der Durchschlagsspannung des Schmierfilms und damit zu einem Lichtbogen zwischen den Wälzkörpern und dem Innen- bzw. Außenring. Abhängig von der im Schmierspalt umgesetzten Energie kann es dabei nunmehr zu Aufschmelzungen in der Laufbahn der Wälzkörper kommen oder aber gar zu Materialverdampfungen am Wälzkörper oder Außen- bzw. Innenring.

Materialverdampfungen sind aber die Voraussetzung für die Ausbildung der schädlichen Riffelstruktur.

Beide Vorgänge Materialaufschmelzungen und Materialverdampfungen setzen jedoch eine bestimmte Mindestenergie voraus, die aus thermodynamischen Berechnungen hergeleitet werden kann. Direkt gemessen werden dafür dabei bei einem Entladungsereignis entweder der elektrische Strom durch das Lager und/oder die elektrische Spannung über dem Lager. Durch die Ermittlung der jeweiligen Momentanleistung $P=U*I$ eines Entladungsereignisses und Aufsummation dieser einzelnen Momentanleistungen durch Integration über die Zeit, wird die im Schmierspalt umgesetzte elektrische Energie bestimmt. Dabei ist die Zeit jeweils eine charakteristische Zeitkonstante mit der das Ereignis stattfindet.

Ist diese Energie größer als die Mindestenergie zur Materialverdampfung, so kann es nun zur Ausbildung von Riffeln kommen. Damit kann nunmehr aus den Energieumsatz im Schmierfilm abgeschätzt werden, ob ein Lager zur Riffelbildung neigt.

Weiterhin kann aus Betriebserfahrungen, deren spezifischen Werte in einer Datenbank abgelegt sind, ein kritisches Gesamtverdampfungsvolumen pro Riffel abgeleitet werden, ab dem ein Lager ausfällt. Somit kann aus der Häufigkeit dieser kritischen Ereignisse die Zeitdauer bis zu einem eventuellen Ausfall des Lagers berechnet werden.

Durch die erfindungsgemäße Vorgehensweise zur Messung bzw. Überwachung von elektrischen Kenngrößen der Lagerströme können nunmehr die Charakteristika der Verläufe der impulsförmigen Entladungsvorgänge erfasst werden, die die irreversiblen Veränderungen im Bereich der Lagerlaufbahnen, der Wälzkörper und/oder der in den Schmierspalten aktiven Schmierstoffe verursachen.

Durch den erfindungsgemäßen Ansatz hinsichtlich der Lagerstrommessung und der zugehörigen Auswertung wird es dabei möglich, die mit den Entladungsvorgängen verbundenen lokal eingetragenen Energien bzw. den zeitlichen Verlauf der lokalen Leistungsdichten zu bestimmen.

Grundsätzlich gibt es, abhängig von der lokalen Leistungsdichte, mindestens folgende Möglichkeiten einer Eingruppierung der Auswirkung eines Stromdurchgangereignisses auf die Wälzlagerkomponenten in verschiedenen Klassen:

Die lokale Leistungsdichte des Stromflusses ist so klein, dass es weder zu einer Beeinflussung der Laufbahnoberflächen noch zu einem Einfluss auf den Schmierstoff kommt, z.B. im direkten metallischen Kontakt der Wälzkörper, somit liegt ein unkritischer Betriebsfall vor.

Die lokale Leistungsdichte des Stromflusses, d. h. die Entladung oder der Festkörpertransport des Stromes bewirkt bereits eine thermische Veränderung des Schmierstoffes ohne jedoch die Laufbahnoberfläche zu verändern. Damit liegt eine Vorstufe zu einem kritischen Zustand des Lagers vor. Insbesondere bei dauergeschmierten Lagern und bei Nichteinhaltung der vorgesehenen Schmierfristen kann sich daraus ein äußerst kritischer Zustand ergeben.

Letztendlich ist aber dieser Fall noch relativ unkritische für das Betriebsverhalten der elektrischen Maschine.

Die lokale Leistungsdichte des Stromflusses ist ausreichend, um eine lokale Aufschmelzung der Laufbahnoberflächen zu bewirken und den Schmierstoff des Wälzlagers zu verändern. Damit liegt bereits ein kritischer Zustand vor.

Die lokale Leistungsdichte des Stromflusses ist so hoch, dass die Laufbahnoberfläche zunächst lokal aufgeschmolzen und nachfolgend verdampft wird und der Schmierstoff zusätzlich verändert wird. Hierbei ergeben sich Abschätzungen für gewisse Wälzlagerstähle, dass bei Stromdurchgangsereignissen, die über eine um ca. eine Größenordnung höhere Energiedichte verfügen, als diejenigen, die nur zu lokalen Aufschmelzungen der Oberfläche nötig sind, die Verdampfung der jeweiligen Oberflächenbereiche einsetzt.

Riffelstrukturen werden durch zusätzliche mechanische Einflüsse, wie mechanische Vorschädigungen der Laufbahn, die nicht grundsätzlich auszuschließen sind, vor allem durch Entladungsvorgänge bedingt, deren Energien, insbesondere lokale Leistungsdichten zu lokalen Aufschmelzungen führen, die jedoch auch einen hohen Anteil der Verdampfungsenergien der entsprechenden Oberflächenbereiche erreichen.

Für die Aufschmelzung in den Lagerringen sowie in den Wälzkörperoberflächen sind zwei Kriterien zu erfüllen. Die Energie des Lagerstromereignisses bzw. die lokale Leistungsdichte muss ausreichend hoch sein bzw. einen bestimmten Wert überschreiten. Des Weiteren darf der Impuls eine bestimmte Höchstdauer nicht überschreiten, da sonst die Wärme bereits im Material abtransportiert werden kann bzw. abfließen kann und es somit nicht zum Aufschmelzen oder gar Verdampfen von Metallen der Laufbahn kommt.

Das Ergebnis verschiedener Messungen zeigt, dass es möglich ist, die Bedingungen unabhängig voneinander zu überprüfen bzw. zu messen. Dazu ist es besonders vorteilhaft, das Entladungsereignis in zwei unterschiedlichen Frequenzbändern zu erfassen. Als Maß für den Energieinhalt des Ereignisses kann im ein- bis mehrstelligen Megahertzbereich die Abfallzeit der Lagerspannung bestimmt werden. Aus dem Verhältnis C*dU/dt ergibt sich die Höhe des Lagerstroms. Wird jetzt nach einem koinzidenten Ereignis im Mikrowellenbereich oberhalb einem Gigahertz gesucht, zeigt ein derartiges Ereignis, dass von einem der Lager schädlichen Lagerstromereignis ausgegangen werden muss.

Die Aufteilung dieser beiden Frequenzbänder ist besonders vorteilhaft, da mit der beschränkten Bandbreite im Basisband von einigen Megahertz nicht zwangsläufig auf die Schädlichkeit geschlossen werden kann. Andererseits ist die Aussendung von Mikrowellen extremen Schwankungen unterworfen. Durch diese Ungenauigkeiten der Messungen im Mikrowellenbereich ist die Bestimmung der Pulsenergie hier nicht möglich und muss somit in einem anderen Frequenzband also dem Megahertzband erfolgen.

Bei sämtlichen erfindungsgemäßen Erfassungen ist selbstverständlich das Abtasttheorem zu berücksichtigen um aussagekräftige Ergebnisse zu erhalten.

Die Erfassung im Gigahertzbereich erfolgt vorteilhafterweise über Antennen.

Entscheidend ist aber jedoch immer die kraterwirksame Energie, die nur innerhalb eines kurzen Zeitintervalls, typischerweise im Bereich einiger hundert Pikosekunden fließen muss, damit die Energie nicht durch Wärmeleitung in ein so großes Volumen abfließt, dass keine Schädigungen mehr hervorgerufen wird. Dieses typischerweise kurze Zeitintervall ist ein wesentlicher Schlüsselparameter für Riffelbildung der Lagerkomponenten, wie Wälzkörper, Innenlagerring und Außenlagerring.

Die kraterwirksame Energie pro Zeiteinheit, ist die Energie, die innerhalb eines bestimmten kurzen Zeitintervalls im Lager durch Entladung freigesetzt wird. Das Zeitintervall bestimmt sich anhand des Kraterdurchmessers $D_K$ und der Schallgeschwindigkeit V.

Typische Werte sind

$$D_K = 1\mu m, V = 2000\frac{m}{s} = 2\frac{\mu m}{ns}$$

$$\Delta T = \frac{D_K}{2}\cdot\frac{1}{V} = 250\,ps$$

Die kraterwirksame Energie wird daher so ermittelt:

$$W_{KE} = \frac{\Delta\frac{1}{2}C\cdot U_{Lager}^2}{\Delta T}$$

Zur Erfassung der kraterwirksamen Energie ist zum einen entweder eine Strommessung oder eine Spannungsmessung oder eine gleichzeitige Strom- und Spannungsmessung notwendig. Zusammen mit der oben ausgeführten Messung derartiger Ereignisse im Mikrowellenbereich, also oberhalb eines GHz können derartige Entladungsereignisse zeitlich und in ihrem Energieinhalt genau bestimmt werden.

Für die Strommessung ist eine Zusatzisolation am Lager mit einer Überbrückung notwendig, mit einer gleichzeitigen Installation einer hochfrequenztauglichen Überbrückung, über welche der Stromfluss gemessen werden kann.

Auch eine damit verbundene gleichzeitige Messung der Lagerspannung und somit die Berechnung der Leistung ist möglich. Diese Leistung entspricht der in einem Zeitintervall übertragenen Energie.

Eine weitere Möglichkeit die kraterwirksame Energie zu erhalten führt über die Entladungsenergie und die Kapazität über dem Lager gemäß folgendem mathematischen Zusammenhang:

$$BVR = U_{Lager} / U_{Gleich}$$

$$BVR = f(C_{Lager})$$

$$C_{Lager} = f^1(U_{Gleich} / U_{Lager})$$

$$W_{Entladung}(t) = \tfrac{1}{2} CU_{Lager}^2$$

$$W_{KE} = \frac{\Delta\frac{1}{2}C\cdot U_{Lager}^2}{\Delta T}$$

$U_{Gleich}$: Gleichtaktspannung an den Motorklemmen
$U_{Lager}$: Spannung über dem Motorlager (Lagerspannung)
t: Zeit
BVR Bearing Voltage Ratio, Verhältnis von $U_{Lager}$ zu $U_{Gleich}$
$C_{Lager}$: Kapazität über dem Motorlager
f: Funktion, zu ermitteln anhand des Ersatzschaltbildes
$f^1$: Umkehrfunktion zu f
$W_{KE}$: Kraterwirksame Energie

Die Spannung am Lager der elektrischen Maschine wird durch einen speziellen Spannungssensor mit z.B. analoger Schaltung gemessen oder durch numerische Signalverarbeitung folgendermaßen berechnet. Durch den Zusammenhang kann nunmehr auf die kraterwirksame Energie geschlossen werden.

Die Darstellung und Auswertung der Energieverteilung erfolgt beispielsweise in einem Diagramm indem die Amplitude der Energie über der gemessenen Spannung aufgetragen wird. Die Ergebnisse bei einer laufenden Messung im Betrieb der dynamoelektrischen Maschine sind eine Anhäufung von Messpunkten, in Form einer Art Energiewolke, welche die Energiebelastung des Lagers beschreibt. Durch diese Darstellungsmethode lassen sich vor allem kritische Energieentladungen erkennbar machen.

Die Ereignisse werden in einer weiteren Ausführungsform auch in einem 3-D Diagramm dargestellt. Die dritte Dimension stellt dabei insbesondere die Häufigkeit des Auftretens in einer sogenannten "Falschfarbendarstellung" dar. (Beispielsweise je roter desto häufiger).

Mit Hilfe einer nachgeschalteten Logik, die vorgebbare, materialabhängige Grenzwerte vorsieht, ist es auch möglich, diese auch für einen Endanwender in einer Art Ampelsystem und damit als Warnsystem zu visualisieren. Mit der Messung der entsprechenden Verweilzeit auf einem Lagerenergieniveau kann innerhalb von Langzeitauswertungen eine Aussage über die mögliche Lagerlebensdauer getroffen werden.

Vorteilhafterweise sind Lager oder die Lagerschilde bereits mit den erforderlichen Messanschlüssen für Spannung und/oder Strom und/oder der Erfassung im GHz-Bereich ausgestattet. Bei Einbau derartiger Lager/Lagerschilde in elektrische Maschinen lassen sich somit Auswerteeinrichtung mit dementsprechendem Speicherplatz und Analysemöglichkeiten in oder an der elektrischen Maschine einfach positionieren, ohne einen separaten HF-tauglichen Messaufbau realisieren zu müssen.

Die Messanschlüsse lassen sich somit hochfrequenztauglich bereits bei der Herstellung der Lager oder Lagerschilde realisieren und überprüfen, so dass Messfehler im Betrieb der elektrischen Maschine aufgrund "fliegender Messaufbauten" minimiert werden können.

Ebenso können über dementsprechende Übertragungswege (Leitungsgebunden oder wire-less) die Messergebnisse oder Auswertungen einer Warte übermittelt werden.

Die Erfindung sowie weitere vorteilhafte Ausgestaltungen der Erfindung sind den Figuren zu entnehmen. Darin zeigen:

FIG 1    eine prinzipielle Anlagenkonfiguration,
FIG 2    ein HF-Ersatzschaltbild eines Motors,
FIG 3    ein Ersatzschaltbild eines Lagers,
FIG 4    ein Diagramm und
FIG 5    ein weiteres Diagramm für die Auswertung.

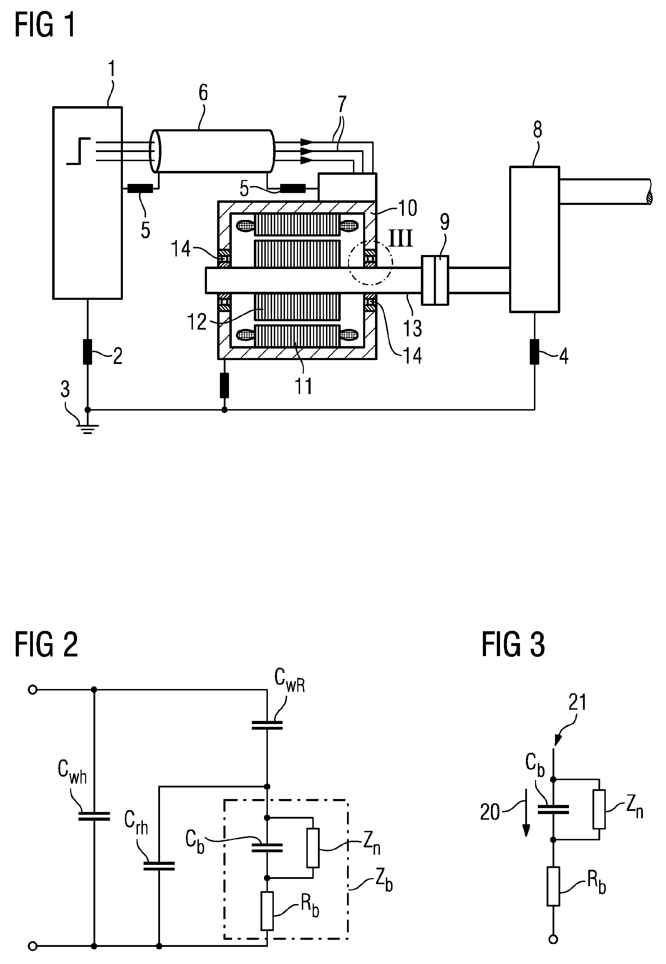

FIG 1 zeigt in einer prinzipiellen Darstellung einen Aufbau einer dynamoelektrischen rotativen Maschine mit umgebenden Anlagenteilen. Im Einzelnen ist dabei ein Umrichter 1 über Anschlussleitungen 7 an eine dynamoelektrische Maschine angeschlossen, die sich innerhalb eines Motorgehäuses 10 befindet und einen Stator 11 und einen Rotor 12 aufweist, der über Lager 14 und eine Welle 13 über eine Kupplung 9 eine Lastmaschine 8 antreibt oder von ihr angetrieben wird.

Die elektrische Verbindung zwischen Umrichter 1 und dynamoelektrischer Maschine über die Anschlusskabel 7 weist einen Kabelschirm 6 auf, der eine dementsprechende Anbindung 5 an die Erde von Umrichter 1 bzw. Motorgehäuse 10 erfährt. Sowohl Umrichter 1 als auch die Lastmaschine 8 sind über eine Erdung 2 bzw. 4 mit der Erde 3 verbunden. Ebenso ist die elektrische Maschine insbesondere über eine nicht näher dargestellten Fuß des Motorgehäuses 10 mit der Anlagenerde elektrisch verbunden.

Die Ausgangsspannung des Umrichters 1, insbesondere als Spannungszwischenkreisumrichter ausgeführt, liegt durch geregeltes Schalten des Gleichspannungszwischenkreises am Ausgang. Ein Wechsel von positiven und negativen Potential in schneller Folge führt bei einem Zweipunktwechselrichter zu einem Spannungsverlauf, dessen Summe der Dreiphasenspannung ungleich Null ist und die sogenannte Common-Mode-Spannung ergibt.

Ein Lager 14, insbesondere ein Wälzlager weist zwischen einem Außenlagerring und einem Innenlagerring mehrere gleichmäßig verteilte Wälzkörper auf. Der Außenlagerring ist normalerweise in einem Lagerschild positioniert, während der Innenlagerring direkt auf einer Welle angeordnet ist. Insbesondere zwischen den Lagerringen und den Wälzkörpern ist ein Schmierfilm von jeweils einigen zehn Mikrometern Dicke. Es existieren also zwei Schmierspalte.

Am Schmierspalt des Lagers 14 bewirkt der kapazitive Spannungsteiler nach FIG 2 ein vollständiges Abbild der Common-Mode-Spannung, die sich betragsmäßig von dieser um die Bearing Voltage Ratio BVR unterscheidet. Dabei ist BVR das Verhältnis der Lagerspannung zur Gleichtaktspannung an den Motorklemmen.

$C_{wh}$    Statorwicklung und Gehäuse
$C_{wr}$    Statorwicklung und Rotoreisen
$C_{rh}$    Rotoreisen und Gehäuse
$C_b$    Schmierfilm Lagerung
$Z_n$    nichtlineare Impedanz des Schmierfilms bei Durchschlag (Lichtbogen)
$R_b$    Ohmscher Widerstand Lagerung

Zwischen Motorklemme und am Gehäuse anliegender Spannung ist entsprechend dem Teilungsverhalten BVR über dem Lager zu messen, wie dies beispielsweise in FIG 3 dargestellt ist. Die Kapazität des Schmierfilms der Lagerung $C_B$ wird über die Kapazität der Rotorwicklung und Rotoreisen pulsförmig durch den Ladestrom 21 der Schmierfilmkapazität aufgeladen, wenn der Schmierfilm isoliert und der Rotor 12 nicht geerdet ist. Das Verhältnis BVR ist ein Maß für die Höhe dieser Aufladung. Übersteigt die Spannung am Lager die Durchschlagsspannung des Lagerschmierfilms, so kommt es zum elektrischen Durchschlag des Schmierfilms.

Die Spannung 20 über der Schmierfilmisolation führt je nach Höhe der Spannung zu einer Entladung. Die Entladung erfolgt lagerintern und führt je nach den oben genannten Ausführungen zu Aufschmelzungen bzw. Verdampfungspunkten in den Lagerlaufbahnen also zu Mikrokratern auf den Laufbahnen der Wälzkörper.

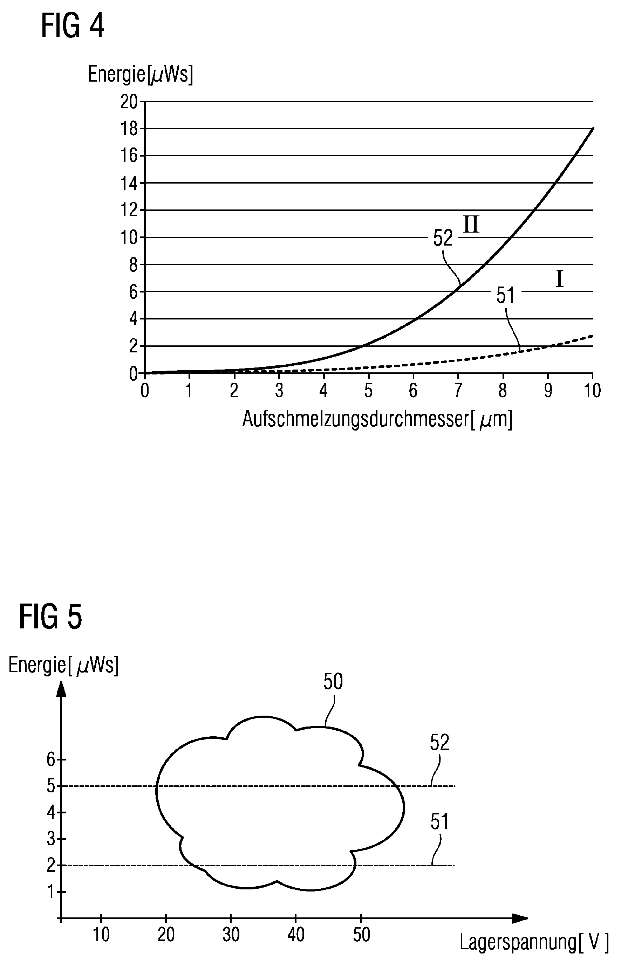

FIG 4 zeigt in einem Diagramm die Energie aufgetragen über dem Aufschmelzungsdurchmesser, wobei Energie im Bereich I zur Aufschmelzung eines Kraters führt und im Bereich II die Energie ausreichend ist, um ein Verdampfen des Metalls, insbesondere Stahl auf den Laufbahnen oder den Wälzkörpern zu erreichen.

FIG 5 zeigt in einem weiteren Diagramm die Energie aufgetragen über der Lagerspannung bei der dementsprechende Impulse aufgetragen sind. Dabei ist eine Verdampfungsenergie 52 und eine Aufschmelzungsenergie 51 dargestellt, und die einzelnen Messpunkte befinden sich in einer Wolke 50, so dass hinsichtlich jedes einzelnen Messpunktes bzw. deren Häufigkeit eine Aussage über die Restlebensdauer des Lagers getroffen werden kann.

**Patentansprüche**

1. Verfahren zur Bewertung einer Schädigung eines Wälzlagers einer elektrischen Maschine, die an einem Umrichter (1) angeschlossen ist, wobei diese Schädigung durch Lagerströme hervorgerufen wird, wobei das Wälzlager jeweils einen Schmierspalt zwischen einem Innenlagerring und einem Wälzkörper und einem Außenlagerring und dem Wälzkörper aufweist, durch folgende Schritte:

   - Erfassung der Energie elektrischer Entladungsereignisse in mindestens einem der Schmierspalte des Wälzlagers,
   - Erfassung der Häufigkeit der Entladungsereignisse,
   - Bewertung der Entladungsereignisse durch Korrelation von Häufigkeit und Energie,

   **dadurch gekennzeichnet, dass** zur Erfassung eines Entladungsereignisses Messungen in zwei unterschiedlichen Frequenzbändern erfolgen, wobei im ein bis mehrstelligen Megahertzbereich eines Frequenzbandes die Energie des Entladungsereignisses bestimmt wird und in einem anderen Frequenzband oberhalb einem Gigahertz nach einem koinzidenten Ereignis gesucht wird, wobei das koinzidente Ereignis zeigt, dass von einem schädlichen Lagerstromereignis ausgegangen werden muss.

2. Verfahren zur Bewertung der Schädigung eines Wälzlagers nach Anspruch 1, **dadurch gekennzeichnet, dass** die Energie durch eine Spannungsmessung über dem Wälzlager (14) und eines kapazitiven Anteils der Kapazität über dem Wälzlager erfasst wird.

3. Verfahren zur Bewertung der Schädigung eines Wälzlagers nach Anspruch 1, **dadurch gekennzeichn e t ,** dass die Energie durch eine Spannungsmessung über dem Wälzlager (14) und einer Lagerisolierung und eines kapazitiven Anteils der Kapazität über dem Wälzlager erfasst wird.

4. Verfahren zur Bewertung der Schädigung eines Wälzlagers nach Anspruch 1, **dadurch gekennzeichnet, dass** die Energie durch eine Stromerfassung eines elektrischen Stroms durch das Wälzlager ermittelt wird.

5. Verfahren zur Bewertung der Schädigung eines Wälzlagers nach Anspruch 4, **dadurch gekennzeichnet, dass** die Stromerfassung über eine Hochfrequenzüberbrückung der Lagerisolation erfolgt, wobei für die Strommessung die Lagerisolation als Zusatzisolation am Wälzlager (40) mit einer Überbrückung notwendig ist, mit einer gleichzeitigen Installation einer hochfrequenztauglichen Überbrückung, über welche der Stromfluss gemessen werden kann.

6. Verfahren zur Bewertung der Schädigung eines Wälzlagers nach Anspruch 1, **dadurch gekennzeichnet, dass** die Energie über eine Spannungsmessung einer elektrischen Spannung über dem Wälzlager und einer Strommessung eines elektrischen Stroms durch das Wälzlager in einem durch das Entladungsereignis vorgegebenen Zeitintervall ermittelt wird.

7. Verfahren zur Bewertung der Schädigung eines Wälzlagers nach einem der vorhergehenden Ansprüche, **dadurch gekennzeichnet , dass** über eine Antenne das Entladungsereignis auch im GHz-Bereich erfasst wird.

8. Vorrichtung, die dazu ausgelegt ist eine Schädigung eines Wälzlagers einer elektrischen Maschine, die an einem Umrichter elektrisch angeschlossen ist, zu bewerten, wobei diese Schädigung durch Lagerströme eintritt, wobei das Wälzlager jeweils einen Schmierspalt zwischen einem Innenlagerring und einem Wälzkörper und einem Außenlagerring und dem Wälzkörper aufweist, mit

   - Mitteln, die dazu ausgelegt sind, den Energieinhalt von Entladungsereignissen in mindesten einem der Schmierspalte zu erfassen,
- Mitteln, die dazu ausgelegt sind, die Häufigkeit der Entladungsereignisse zu erfassen,
- einer Auswerteeinrichtung, die dazu ausgelegt ist, die erfassten Daten der Häufigkeit und des Energieinhalts zu bewerten,

**dadurch gekennzeichnet, dass** Mittel, die dazu ausgelegt sind, ein Entladungsereignis durch Messungen in zwei unterschiedlichen Frequenzbändern zu erfassen, vorhanden sind, wobei Mittel, die dazu ausgelegt sind, die Energie des Entladungsereignisses im ein- bis mehrstelligen Megahertzbereich eines Frequenzbands zu bestimmen, vorhanden sind und Mittel, die dazu ausgelegt sind, ein koinzidentes Ereignis in einem anderen Frequenzband oberhalb einem Gigahertz zu suchen, wobei das koinzidente Ereignis zeigt, dass von einem schädlichen Lagerstromereignis ausgegangen werden muss.

9. Vorrichtung nach Anspruch 8, **dadurch gekennzeichnet, dass** die Mittel, die dazu ausgelegt sind eine Spannung am Wälzlager zu erfassen, Tastköpfe sind, die im Pikosekundenbereich Signale erfassen.

10. Vorrichtung nach Anspruch 8, **dadurch gekennzeichnet, dass** die Vorrichtung einen geeigneten Hochfrequenzstromwandler umfasst, der dazu ausgelegt ist, einen Entladungsstrom zu erfassen.

11. Vorrichtung nach Anspruch 9, **dadurch gekennzeichnet, dass** die Vorrichtung eine Auswerteeinrichtung aufweist und die Vorrichtung dazu ausgelegt ist, die Daten der Tastköpfe an die Auswerteeinrichtung zur Aufnahme und Speicherung der Daten, insbesondere an ein Oszilloskop mit geeigneter Grenzfrequenz, weiterzuleiten.

12. Vorrichtung nach Anspruch 10, **dadurch gekennzeichnet , dass** die Vorrichtung eine Auswerteeinrichtung aufweist und die Vorrichtung dazu ausgelegt ist, die Daten der Hochfrequenzstromwandler an die Auswerteeinrichtung zur Aufnahme und Speicherung der Daten, insbesondere an ein Oszilloskop mit geeigneter Grenzfrequenz, weiterzuleiten.

13. Vorrichtung nach einem der vorhergehenden Ansprüche 8 bis 10, **dadurch gekennzeichnet, dass** Messeinrichtungen zur Spannungserfassung und/oder Stromerfassung und zur Detektierung hochfrequenter Vorgänge im GHz-Bereich im Wälzager (14) und/oder im Lagerschild angeordnet sind.

14. Wälzlager, das für eine Vorrichtung nach einem der vorhergehenden Ansprüche 8 bis 10 ausgelegt ist,
**dadurch gekennzeichnet, dass** Messeinrichtungen zur Spannungserfassung und/oder Stromerfassung und zur Detektierung hochfrequenter Vorgänge im GHz-Bereich im Wälzlager (14) angeordnet sind.

15. Elektrische Maschine mit einem Wälzlager (14), und/oder einem Lagerschild für eine Vorrichtung nach einem der vorhergehenden Ansprüchen 8 bis 10,
**dadurch gekennzeichnet, dass** eine Auswerteeinrichtung mit Speicherplatz und Analysemöglichkeiten in oder an einem Motorgehäuse (10) der elektrischen Maschine angebracht ist, wobei Messeinrichtungen zur Spannungserfassung und/oder Stromerfassung und zur Detektierung hochfrequenter Vorgänge im GHz-Bereich im Wälzlager (14), und/oder im Lagerschild angeordnet sind.

**Claims**

1. Method for assessing damage to a rolling bearing of an electrical machine, which is connected to an inverter (1), wherein this damage is caused by bearing currents,
wherein the rolling bearing has a lubrication gap in each case between an inner bearing ring and a rolling body and an outer bearing ring and the rolling body, achieved by the following steps:

   - Detecting the energy of the electric discharge events in at least one of the lubrication gaps of the rolling bearing,
   - Detecting the frequency of the discharge events,
   - Assessing the discharge events by correlation of frequency and energy,

   **characterised in that** measurements take place to detect a discharge event in two different frequency bands, wherein the energy of the discharge event is determined in the single to multi-digit Megahertz range of a frequency band and a coincident event is sought after in another frequency band above one Gigahertz, wherein the coincident event shows that the starting point must have been a damaging bearing current event.

2. Method for assessing the damage to a rolling bearing according to claim 1, **characterised in that** the energy is detected by voltage measurement across the rolling bearing (14) and of a capacitive component of the capacity across the rolling bearing.

3. Method for assessing the damage to a rolling bearing according to claim 1, **characterised in that** the energy is detected by voltage measurement across the rolling bearing (14) and of a bearing insulation and of a capacitive component of the capacity across the rolling bearing.

4. Method for assessing the damage to a rolling bearing according to claim 1, **characterised in that** the energy is determined by a current detection of an electrical current through the rolling bearing.

5. Method for assessing the damage to a rolling bearing according to claim 4, **characterised in that** the current is detected via a high-frequency bridging of the bearing insulation, wherein for the current measurement an additional isolation in the form of bearing insulation at the rolling bearing (40) with a bridging is necessary with a simultaneous installation of high-frequency-proof bridging via which the current flow can be measured.

6. Method for assessing the damage to a rolling bearing according to claim 1, **characterised in that** the energy is determined by a voltage measurement of an electrical voltage across the rolling bearing and a current measurement of an electrical current through the rolling bearing in a time interval predetermined by the discharge event.

7. Method for assessing the damage to a rolling bearing according to one of the preceding claims, **characterised in that** the discharge event is also detected in the GHz range via an antenna.

8. Device which is configured to assess the damage to a rolling bearing of an electrical machine which is electrically connected to an inverter, wherein this damage occurs through bearing currents, wherein the rolling bearing in each case has a lubrication gap between an inner bearing ring and a rolling body and an outer bearing ring and the rolling body, with

- Means which are configured to detect the energy content of discharge events in at least one of the lubrication gaps,
- Means which are configured to detect the frequency of the discharge events,
- An evaluation device which is configured to assess the detected data of the frequency and of the energy content,

**characterised in that** means which are configured to detect a discharge event by measurements in two different frequency bands are present, wherein means which are configured to determine the energy of the discharge event in the single to multi-digit Megahertz range of a frequency band are present and means which are configured to search for a coincident event in another frequency band above one Gigahertz, wherein the coincident event shows that the starting point must have been a damaging bearing current event.

9. Device according to claim 8, **characterised in that** the means, which are configured to detect a voltage at the rolling bearing, are sampling probes which detect signals in the picosecond range.

10. Device according to claim 8, **characterised in that** the device comprises a suitable high-frequency current converter, which is configured to detect a discharge current.

11. Device according to claim 9, **characterised in that** the device has an evaluation device and the device is configured to forward the data of the voltage sampling probes to the evaluation device for accepting and storing the data, especially to an oscilloscope with a suitable limit frequency.

12. Device according to claim 10, **characterised in that** the device has an evaluation device and the device is configured to forward the data of the high-frequency current converters to the evaluation device for accepting and storing the data, especially to an oscilloscope with a suitable limit frequency.

13. Device according to one of the preceding claims 8 to 10, **characterised in that** measurement devices for voltage detection and/or current detection and for detecting high-frequency processes in the GHz range are disposed in the rolling bearing (14) and/or in the bearing shield.

14. Rolling bearing, which is configured for a device according to one of the preceding claims 8 to 10, **characterised in that** measurement devices for voltage detection and/or current detection and for detecting high-frequency processes in the GHz range are disposed in the rolling bearing (14).

15. Electrical machine with the rolling bearing (14) and/or a bearing shield for a device according to one of the preceding claims 8 to 10, **characterised in that** an evaluation unit with storage space and analysis options is attached in or on a motor housing (10) of the electrical machine, wherein measurement devices for voltage detection and/or current detection and for detecting high-frequency processes in the GHz range are disposed in the rolling bearing (14) and/or in the bearing shield.

**Revendications**

1. Procédé d'évaluation d'un endommagement d'un palier à roulement d'une machine électrique connectée à un convertisseur (1), cet endommagement étant provoqué par des courants parasites,

dans lequel le palier à roulement a, respectivement, un interstice de lubrification entre une bague intérieure de palier et un corps de roulement et une bague extérieure de palier et le corps de roulement, par les stades suivants :

    - détection de l'énergie d'événements de décharge électrique dans au moins l'un des interstices de lubrification du palier à roulement,
    - détection de la fréquence des événements de décharge,
    - évaluation des événements de décharge par corrélation de la fréquence et de l'énergie,

**caractérisé en ce que**
pour détecter un événement de décharge, on effectue des mesures dans deux bandes de fréquences différentes, dans lequel on détermine, dans une plage de mégahertz de un à plusieurs chiffres d'une bande de fréquences, l'énergie de l'événement de décharge et on recherche, dans une autre bande de fréquences au-dessus d'un gigahertz, un événement coïncident, l'événement coïncident montrant qu'il faut conclure à un événement dommageable de courant parasite.

**2.** Procédé d'évaluation de l'endommagement d'un palier à roulement suivant la revendication 1, **caractérisé en ce qu'**on détecte l'énergie par une mesure de tension aux bornes du palier (14) à roulement et de la proportion capacitive de la capacité aux bornes du palier à roulement.

**3.** Procédé d'évaluation de l'endommagement d'un palier à roulement suivant la revendication 1, **caractérisé en ce qu'**on détecte l'énergie par une mesure de tension sur le palier (14) à roulement et l'isolation du palier et par une proportion capacitive de la capacité sur le palier à roulement.

**4.** Procédé d'évaluation de l'endommagement d'un palier à roulement suivant la revendication 1, **caractérisé en ce qu'**on détermine l'énergie par une détection d'un courant électrique passant dans le palier à roulement.

**5.** Procédé d'évaluation de l'endommagement d'un palier à roulement suivant la revendication 4, **caractérisé en ce qu'**on effectue la détection du courant par une dérivation de haute fréquence de l'isolation du palier, dans lequel, pour la mesure du courant, l'isolation du palier est nécessaire comme isolation supplémentaire au palier (40) à roulement avec une dérivation, avec une installation simultanée d'une dérivation valable en haute fréquence, par laquelle on peut mesurer le flux de courant.

**6.** Procédé d'évaluation de l'endommagement d'un palier à roulement suivant la revendication 1, **caractérisé en ce qu'**on détermine l'énergie par une mesure de tension électrique aux bornes du palier à roulement et par une mesure d'un courant électrique passant dans le palier à roulement dans un intervalle de temps donné à l'avance par l'événement de décharge.

**7.** Procédé d'évaluation de l'endommagement d'un palier à roulement suivant l'une des revendications précédentes, **caractérisé en ce qu'**on détecte l'événement de décharge par une antenne et également dans la plage du GHz.

**8.** Dispositif conçu pour évaluer un endommagement d'un palier à roulement d'une machine électrique connectée électriquement à un convertisseur, cet endommagement se produisant par des courants parasites,
le palier à roulement ayant respectivement un interstice de lubrification entre une bague intérieure de palier et un corps de roulement et une bague extérieure de palier et le corps de roulement, comprenant :

    - des moyens conçus pour détecter la teneur énergétique d'événements de décharge dans au moins l'un des interstices de lubrification,
    - des moyens conçus pour détecter la fréquence des événements de décharge,
    - un dispositif d'exploitation conçu pour évaluer les données détectées de la fréquence et de la teneur énergétique,

**caractérisé en ce que**
il y a des moyens conçus pour détecter un événement de décharge par des mesures dans deux bandes de fréquences différentes, il y a des moyens conçus pour déterminer l'énergie de l'événement de décharge dans la plage du mégahertz de un à plusieurs chiffres d'une bande de fréquences et des moyens conçus pour rechercher un événement coïncident dans une autre bande de fréquences au-dessus d'un gigahertz, l'événement coïncident montrant qu'il faut conclure à un événement dommageable de courant parasite.

**9.** Dispositif suivant la revendication 8, **caractérisé en ce que** les moyens conçus pour détecter une tension aux bornes du palier à roulement sont des têtes palpeuses, qui détectent des signaux dans la plage des picosecondes.

**10.** Dispositif suivant la revendication 8, **caractérisé en ce que** le dispositif comprend un convertisseur de courant de haute fréquence approprié, conçu pour détecter un courant de décharge.

11. Dispositif suivant la revendication 9, **caractérisé en ce que** le dispositif a un système d'exploitation et le dispositif est conçu pour acheminer les données des têtes palpeuses au système d'exploitation pour l'enregistrement et la mémorisation des données, notamment à un oscilloscope ayant une fréquence limite appropriée.

12. Dispositif suivant la revendication 10, **caractérisé en ce que** le dispositif a un système d'exploitation et le dispositif est conçu pour acheminer les données du convertisseur de haute fréquence au système d'exploitation pour enregistrer et mémoriser les données, notamment à un oscilloscope ayant une fréquence limite appropriée.

13. Dispositif suivant l'une des revendications précédentes 8 à 10, **caractérisé en ce que** des dispositifs de mesure pour détecter la tension et/ou pour détecter le courant et/ou pour détecter des processus en haute fréquence dans la plage du GHz sont montés dans le palier (14) à roulement et/ou dans le flasque du palier.

14. Palier à roulement conçu pour un dispositif suivant l'une des revendications précédentes 8 à 10, **caractérisé en ce que** des dispositifs de mesure, pour détecter la tension et/ou pour détecter le courant et pour détecter des processus en haute fréquence dans la plage du GHz, sont montés dans le palier (14) à roulement.

15. Machine électrique ayant un palier (14) à roulement et/ou un flasque de palier pour un dispositif suivant l'une des revendications précédentes 8 à 10, **caractérisée en ce qu'**un système d'exploitation ayant un emplacement de mémoire et des possibilités d'analyse est mis dans ou sur un carter (10) de moteur de la machine électrique, des dispositifs de mesure, pour détecter la tension et/ou pour détecter le courant et pour détecter des processus en haute fréquence du GHz, étant montés dans le palier (14) à roulement et/ou dans le flasque du palier.

FIG 1

FIG 2

FIG 3

EP 2 539 680 B1

## FIG 4

Energie[$\mu$Ws]

II
52

I
51

Aufschmelzungsdurchmesser[$\mu$m]

## FIG 5

Energie[$\mu$Ws]

50

52

51

Lagerspannung[ V ]

12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1835598 A1